# EUROPEAN PATENT SPECIFICATION

(11) **EP 4 585 353 B1**
(45) Date of publication and mention of the grant of the patent: **29.04.2026**
(21) Application number: 24217442.3
(22) Date of filing: 04.12.2024
(51) Int. Cl.: B23K 26/046, B23K 26/06, B23K 26/082, B23K 26/08, B23K 26/38, H01M 4/04, B23K 101/16, B23K 101/36

(54) **A LASER CUTTING APPARATUS AND RELATIVE METHOD**
LASERSCHNEIDVORRICHTUNG UND ZUGEHÖRIGES VERFAHREN
APPAREIL DE DÉCOUPE AU LASER ET PROCÉDÉ ASSOCIÉ

(30) Priority: 21.12.2023 IT 202300027684
(43) Date of publication of application: 16.07.2025
(73) Proprietor: Fameccanica.Data S.p.A., 66020 San Giovanni Teatino (CH) (IT)
(72) Inventor: LUPINETTI, Serafino, 66020 San Giovanni Teatino (Chieti) (IT); IAVAZZO, Enrico, 66020 San Giovanni Teatino (Chieti) (IT)
(74) Representative: Buzzi, Notaro & Antonielli d'Oulx S.p.A.

(56) References cited:
- WO-A1-2022/215878
- KR-A- 20130 098 740
- US-A1- 2018 079 035
- US-A1- 2020 406 401
- US-A1- 2023 249 291

## Description

### Field of the invention

The present invention refers to an apparatus and relative cutting method in the production of electrical energy storage devices.

### State of the art

Electrical energy storage devices of the wound type or comprising a plurality of monocells stacked on top of each other and each consisting of a first electrode film, a second electrode film and at least one separator interposed between said first and second electrode films are known. These electrical energy storage devices may be, for example, cylindrical, prismatic or pouch batteries. For example, a monocell may comprise: a first separator, made of microporous insulating material, such as paper or polymer based; a first electrode film, such as an anode, comprising a conductive material, such as copper; a second separator; and a second electrode film, such as a cathode, comprising a conductive material, such as aluminium.

Each electrode film is appropriately shaped from a continuous film of material, unwound from a reel. In particular, a tab, or strip, is created on the sides of the electrode film to allow the subsequent electrical connection of the electrode film with electrode films of the same polarity (anode or cathode) of the other monocells of the battery. Additional lateral depression shapes, such as chamfer notches, may also be provided. This lateral shaping (creation of tabs and chamfer notches), also called notching, is generally achieved by unwinding the film of material, cutting it with a mechanical blade or laser along the feed direction and rewinding the laterally shaped film. Individual electrode films may be obtained from the shaped film by unwinding it again and cutting it transversely to the feed direction.

Thus, a monocell production plant generally comprises a first cutting apparatus to perform the notching cut and one or more distinct and separate apparatuses from it to obtain the individual electrode films, produce the individual monocells by lamination and finally stack a plurality of monocells. In other words, the production process is not continuous, which limits its speed and therefore productivity.

The cut transverse to the feed direction required to separate each electrode film is generally performed with a mechanical blade, which is therefore subject to wear. As a result, over time, as the blade wears out, the cutting quality decreases; the blade must be periodically sharpened or replaced, causing both high maintenance costs and machine downtime.

US2018079035A1 discloses a method for producing electrode sheet with tab wherein an original sheet is continuously moved. An ear portion is separated from an electrode portion with a first laser beam in an ear portion separating region provided in the middle of movement of the original sheet, is taken up at a position where the ear portion is separated, in a direction separated from a running direction of the electrode portion, and the laser beam is moved in the ear portion separating step to cut out a tab connected to the electrode portion, from the ear portion.

US2023249291A1 discloses a laser notching apparatus for cutting of electrode sheets including a conveyor and a laser device. The conveyor is configured to move an original sheet including an electrode portion and an ear portion extending from an edge of the electrode portion. The laser device is configured to move a laser to cut out a tab connected to the electrode portion from the ear portion of the original sheet. The laser device is also configured to move the laser from one edge of the electrode portion to another edge of the electrode portion to cut and separate a respective electrode sheet including the tab from the original sheet.

KR20130098740A, on which the preamble of claims 1 and 4 is based, discloses a film cutter comprising a transfer frame, a transfer unit, a first cutting unit, a second cutting unit, an operator, and a controller. The transfer frame is mounted in order to transfer a film. The transfer unit transfers the film from one side to the other side. The first cutting unit irradiates a first laser beam in one part of the film, and cuts a part of a pattern. The second cutting unit irradiates a second laser beam in a part of the film, and cuts a remaining part of the pattern. The operator computes a transferring speed of the film and a cutting time of the film. The controller controls an operation of the first and the second cutting unit according to a calculation of the operator.

### Object and summary of the invention

The object of the present invention is to create a cutting apparatus and relative method which is precise, fast, efficient and subject to little wear.

Another object of the present invention is to provide an in-line machine, and relative method, for the continuous and compact production of monocells and/or stacked cells.

The present invention is expressed and characterized in the independent claims. The dependent claims set forth other characteristics of the present invention or variants of the main solution idea.

In accordance with the aforesaid objects and to resolve the aforesaid technical problem in a new and original way, also obtaining notable advantages with respect to the state of the art, a cutting apparatus according to the present invention for the production of a monocell electrode film for an electrical energy storage device starting from an incoming film comprises a device for the continuous movement of such incoming film and a cutting unit.

An electrical energy storage device in accordance with possible examples described herein may be a cylindrical, prismatic or "pouch" battery comprising a wound laminate or a plurality of monocells stacked on top of each other and each consisting of a first electrode film, a second electrode film and at least one separator interposed between said first and second electrode films.

The aforesaid movement device is configured for the continuous movement of the aforesaid incoming film in a machine direction.

In accordance with an aspect of the present invention, the aforesaid cutting unit comprises two laser head devices configured to generate and focus each at least one respective laser beam along a desired optical axis so as to continuously perform notching and singularizing of said incoming film in a single passage via laser cutting.

Notching cutting refers to a lateral shaping for creating characteristic elements of an electrode film, necessary at least to create an electrical contact between multiple electrode films of the same electrical energy storage device.

"Singularization" means obtaining individual electrode films separate from each other.

Each of the aforesaid laser head devices comprises two optical movement devices configured to receive and direct the respective laser beam so that it strikes the incoming film. It also comprises at least one control unit configured to control these two optical movement devices so as to selectively move the respective laser beam striking on the incoming film along two respective axes perpendicular to each other and to the aforesaid optical axis, so that the two laser head devices in combination are capable of continuously performing notching cutting and singularizing of the incoming film in the same passage.

In this way, a compact and efficient cutting apparatus is obtained, since it allows the notching cutting and the singularizing to be performed continuously, by means of laser cutting and in the same step, that is, without the need to stop or reverse the advancement of the incoming film along the machine direction.

In accordance with another aspect of the present invention, each laser head device comprises at least one motorized linear translator configured to move a mobile lens positioned to intercept the respective laser beam so as to selectively modify along the aforesaid optical axis a focus position of the respective laser beam striking on the incoming film, thus achieving a dynamic modulation of a focal distance of the laser beam itself along said optical axis depending on a required position of such laser beam on the surface of the incoming film.

In accordance with another aspect of the present invention, aforesaid optical movement devices each comprise at least one first and one second galvanometric motor configured to move a respective first and second mirror to guide the respective laser beam selectively along said respective axes.

A further aspect described here refers to a cutting method for the production of electrical energy storage devices from an incoming film. This method involves continuously moving said film along a machine feed direction and performing a laser cut using a cutting unit. Furthermore, this method continuously performs notching cutting and singularizing of the aforesaid film in a single step by means of at least two laser head devices of said cutting unit which each generate and focus at least one respective laser beam along a desired optical axis so as to strike the incoming film and selectively move it along two respective axes perpendicular to each other and to the aforesaid optical axis by means of two optical movement devices controlled by at least one control unit.

The present invention also concerns an in-line machine for continuously producing monocells for the production of electrical energy storage devices. This in-line machine may comprise, in succession along the machine direction, material feeding devices for producing two respective electrode films and one or more separators, at least one cutting apparatus as described above, a lamination apparatus configured for coupling the electrode films with a separator film, a possible further lamination unit for coupling a further separator film, a further cutting station for a final cut of the coupled material in order to separate single cells and a monocell stacking apparatus.

Another aspect of the present invention is an in-line method for continuously producing monocells for producing electrical energy storage devices. This method may favorably utilize an in-line machine in accordance with the present description.

### Brief description of the drawings

These and other aspects, characteristics and advantages of the present invention will become clear from the following description of embodiments, given as a non-limiting example, with reference to the attached drawings wherein:
- Fig. 1 is a schematic and simplified view of a first embodiment of a cutting apparatus according to the present invention;
- Fig. 2 is a schematization of the layered structure of a monocell for an electrical energy storage device;
- Fig. 3 is a top view of a single electrode film obtainable with the apparatus of Figs. 1 or 4;
- Fig. 4 is a schematic and simplified view of a second embodiment of a laser cutting apparatus according to the present invention;
- Figs. 5a-c are schematic representations of possible laser head devices for the apparatuses of Figs. 1 or 4;
- Figs. 6a-b are top views of a portion of film shaped by means of the apparatus of Figs. 1 or 4;
- Fig. 7 is a schematic representation of an in-line machine according to the present invention for the production of monocells for electrical energy storage devices.

It is specified that in this description the phraseology and terminology used, as well as the figures of the attached drawings, even as described, have the sole function of illustrating and explaining the present invention better, having a non-limiting exemplifying function of the invention itself, the scope of protection being defined by the claims.

To facilitate understanding, identical reference numbers have been used, where possible, to identify identical common elements in the Figures. It should be understood that elements and characteristics of an embodiment can be conveniently combined or incorporated in other embodiments without further specification.

### Detailed description

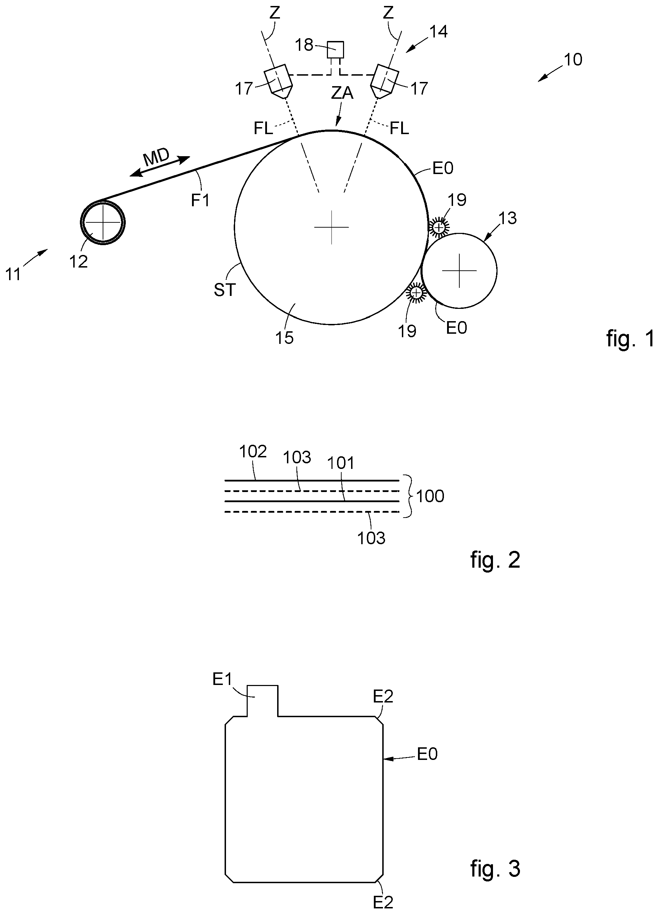

With reference to Fig. 1, a cutting apparatus 10 according to embodiments described herein is configured to produce an electrode film 101, 102 usable for the production of monocells 100 (Fig. 2). These monocells 100 may be stacked on top of each other to create electrical energy storage devices, such as a prismatic or "pouch" battery, starting from an incoming film F1 of material. A prismatic or "pouch" battery is a possible example of an electrical energy storage device of the type comprising a plurality of monocells 100 stacked on top of each other and each consisting of a first electrode film 101, a second electrode film 102 and at least one separator 103 placed between said first 101 and second 102 electrode films, or more separators. A monocell 100 may envisage in succession a first electrode film 101, a separator 103, a second electrode film 102 and a further separator 103 (Fig. 2).

The apparatus 10 is configured to perform at least one lateral shaping, or notching, on the incoming film F1 and at least one transverse separation, or singularizing, of each electrode film 101 or 102 from the shaped incoming film F1 in the same pass.

The aforesaid notching cutting involves creating characteristic elements at least along a lateral perimeter of the incoming film F1, necessary at least to create an electrical contact between several first electrode films 101, and between several second electrode films 102 of the battery.

The first electrode film 101, e.g. an anode, and the second electrode film 102, e.g. a cathode, are similar, but may differ in composition and, slightly, in the shape and/or size of the aforesaid notching cutting characteristic elements. However, the general configuration and operating principle of the apparatus 10 according to the present invention do not change depending on whether they are used to produce first electrode films 101 or second electrode films 102, therefore, in the following, reference will be made to a generic electrode film indicated as electrode film E0.

As shown in Fig. 3, each electrode film E0 may be provided with a tab E1, configured to protrude from the separators 103 of the monocell 100 and thus be available to form electrical contacts, to form a first pole (for the first electrode film 101) or a second pole (for the second electrode film 102) of the complete monocell 100.

Additional characteristic elements, such as chamfer notches E2, may also be provided.

The apparatus 10, as in Fig. 1, may comprise a movement device 11 and a cutting unit 14.

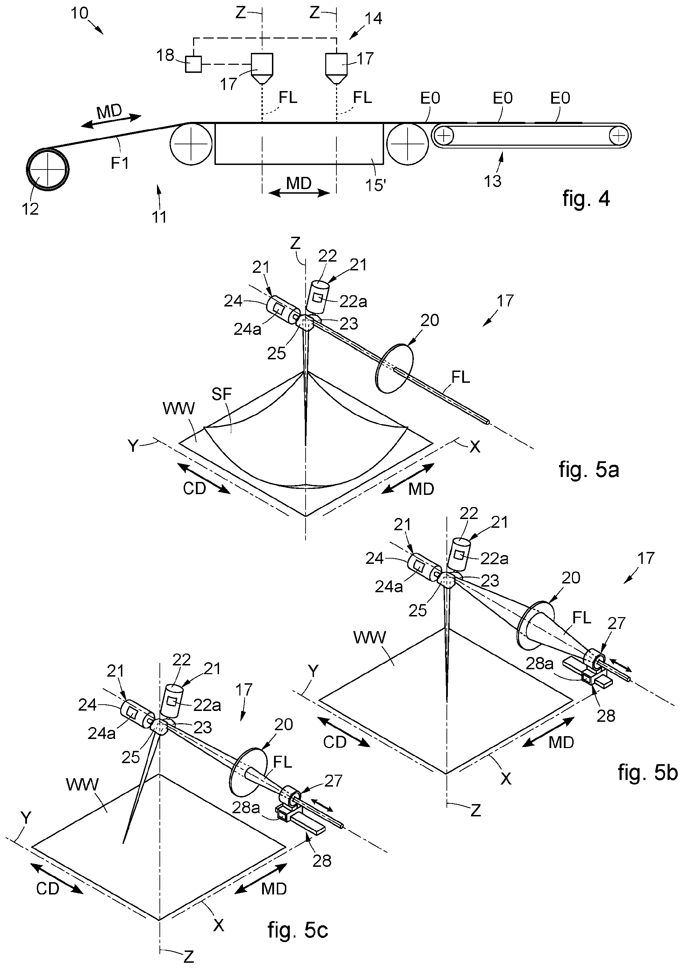

The movement device 11 may comprise a supply reel 12, or unwinder, and a transfer device 13, for example a vacuum. The supply reel 12 is configured to feed, by unwinding, the incoming film F1 to the cutting unit 14. The transfer device 13 is configured to transfer each shaped and singularized electrode film E0 exiting the cutting unit 14 to a stacking, storage or further processing apparatus. Possible embodiments of the transfer device 13 include a vacuum conveyor wheel (Fig. 1), a conveyor belt (Fig. 4) or the like.

The apparatus 10 is configured to continuously work the incoming film F1 to perform notching cutting and singularization, thus obtaining the electrode film E0. The continuous movement of the incoming film F1 is achieved by the movement device 11. The direction of movement, or advancement of the film defines a machine direction MD.

The apparatus 10 may comprise a rotating aspirated drum 15 configured to support and stably maintain in position the incoming film F1 during cutting operations. By "aspirated" it is meant that the rotating drum 15 comprises a vacuum suction system, which allows the incoming film F1 to be kept adherent to a curved outer lateral surface ST of the rotating drum 15 itself at least at an adhesion area ZA which extends upstream, at and downstream of the cutting unit 14 with respect to a direction of advancement of the incoming film F1 along the machine direction MD, so as to keep the incoming film F1 stably adherent at least in the adhesion area ZA during cutting.

In alternative embodiments (Fig. 4), the apparatus 10 may comprise a vacuum support plane 15' configured to support and stably maintain in position the incoming film F1 during cutting operations.

The cutting unit 14 comprises two laser head devices 17 configured to generate, focus and move at least one respective laser beam FL each in order to continuously perform the intended notching cutting and singularization.

Each laser head device 17 (Figs. 5a-c) may comprise a laser source, one or more optical focusing elements 20, such as a focusing lens, at least two optical movement devices 21 and at least one control unit, for example two control units 22a, 24a. The two optical movement devices 21 may be configured to receive and direct the respective laser beam FL so that it strikes the incoming film F1.

Each laser head device 17 may be configured to generate and focus the respective laser beam FL along a desired optical axis Z essentially perpendicular to the incoming film surface F1, i.e. in a radial direction with respect to the rotating drum 15 or perpendicular to the support plane 15'.

Each laser head device 17 may be configured to move the respective laser beam FL along at least two axes X, Y perpendicular to each other and to the optical axis Z (Fig. 5a).

In particular, the at least one control unit 22a, 24a may be configured to control the two optical movement devices 21 so as to selectively move the respective laser beam FL striking on the incoming film F1 at least along the two axes X, Y, so that the two laser head devices 17 in combination are able to continuously perform notching cutting and singularizing of the incoming film F1 in the same passage.

This has the advantage of being able to perform notching cutting and singularizing of the incoming film F1 with the same apparatus 10 without having to stop or reverse the advancement of the incoming film F1 along the machine direction MD, making the apparatus 10 much more compact and efficient than known electrode E0 production systems, which require notching cutting and singularizing to be performed with two separate machines.

For this object, each optical movement device 21 may comprise at least one first galvanometric motor 22 and one second galvanometric motor 24. The first 22 and second 24 galvanometric motors may be configured to move a respective first mirror 23 and second mirror 25 to guide the laser beam FL selectively along the respective axes X, Y. The first 22 and second 24 galvanometric motors with the respective first 23 and second 25 mirrors essentially constitute a galvanometric scanner. A first control unit 22a may be configured to control the first galvanometer motor 22 and a second control unit 24a may be configured to control the second galvanometer motor 24.

The aforesaid movement axes X, Y of a given laser beam FL may correspond respectively to the machine direction MD and a transverse direction CD on the incoming film surface F1.

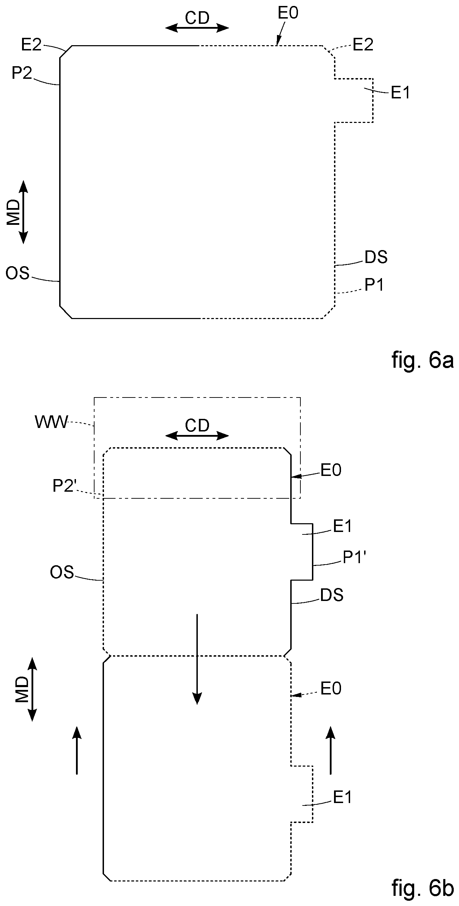

One of the at least two laser head devices 17 may be configured to work a first side, or control side DS of the film being processed parallel to the machine direction MD, while the other of the at least two laser head devices 17 may be configured to work an opposite second side, or operator side OS of the film being processed parallel to the machine direction MD (Figs. 6a-b).

The control side DS of each electrode film E0 (Figs. 6a-b) may need to be provided with a tab E1 and a chamfer notch E2, while the operator side OS may need to be provided with a chamfer notch E2.

Evidently, it is also possible to exchange the elements made on the control side DS with those made on the operator side OS obtaining equivalent electrode films E0.

The use of two laser head devices 17 advantageously allows the continuous execution of notching cutting and singularization in a single pass at the same cutting apparatus 10.

Each laser head device 17 may be configured to perform cuts in the opposite direction to the direction of advancement of the incoming film F1, so as to reduce the relative cutting speed with respect to the incoming film F1 and consequently the stress to which the galvanometric motors 22, 24 are subjected due to the inertial effect.

Two possible cutting profiles for the continuous execution of the notching cuts and singularization on the incoming film F1 are shown in Figs. 6a-b. Fig. 6a envisages that each laser head device 17 is configured to perform the notching cutting of one of the two sides DS, OS of the incoming film F1 and a portion, for example half, of the transverse singularization cut along the transverse direction CD, respectively obtaining the cutting profiles P1, P2. Fig. 6b envisages that each laser head device 17 is configured to alternately perform the notching cutting of both sides DS, OS, changing the working side between each electrode film E0 and the successive electrode film E0, performing the transversal singularization cut by modulating the energy profile of each laser beam FL at least in the passage from the control side DS to the operator side OS or vice versa, obtaining the cutting profiles P1', P2'. The alternation of the laser head devices 17 is configured so that, for a given electrode film E0, one of the two laser head devices 17 performs the notching cut of one of the two sides DS, OS, while the other of the two laser head devices 17 performs the notching cut of the other of the two sides OS, DS. The energy profile of each laser beam FL may be appropriately modulated at least to avoid excessive use of energy in the sections of the cutting profile common to the two laser beams FL, for example the sections corresponding to the transversal singularization cut.

The cutting profiles P1, P2, P1', P2' are periodically repeated static cutting profiles. As such, they can be advantageously translated, taking into account the advance motion of the incoming film F1 along the machine direction MD, into respective closed dynamic cutting profiles and therefore into closed trajectories of the respective laser beams FL. Each laser head device 17 may then be configured to continuously perform a series of identical work cycles. Each work cycle may include a sequence of movements of the respective laser beam FL corresponding to the continuous execution of the closed dynamic cutting profile, ending each work cycle with the laser beam FL in the same position wherein the work cycle itself started. The dynamic cutting profile can be advantageously centered in a working window WW of the respective laser beam FL, understood as the area of the incoming film surface F1 within which the laser beam FL can be moved to perform the cuts.

The apparatus 10 may comprise a management and synchronization unit 18, configured to manage each laser source by modulating its emitted power, synchronize each laser head device 17 and synchronize the advancing movement of the incoming film F1 along the machine direction MD with the movement of the laser beam FL of each laser head device 17, as well as to mutually synchronize the two laser beams FL.

The management and synchronization unit 18 may comprise at least one software management module configured to translate, for each laser head device 17, a respective static cutting profile P1, P2, P1', P2' into a closed dynamic cutting profile, providing each first 22a and second 24a control unit of each laser head device 17 with the coordinates for positioning the respective laser beam FL within the respective working window WW so that each laser beam FL creates the respective closed dynamic cutting profile, corresponding to a work cycle. Each work cycle may correspond to the notching cut for a single electrode E0.

The closing of a dynamic cutting profile, i.e. the completion of a work cycle, may coincide with the generation of a periodic signal, also called a clock signal, for the synchronization of the movement devices involved, i.e. the optical movement devices 21 (in particular, each first 22 and second 24 galvanometric motor) of each laser head device 17 and, if present, of the rotating drum 15 (for example, of a dedicated servomotor associated therewith).

This clock signal may be provided by a position transducer, or z-encoder, associated with the advancing position of the incoming film F1, for example with an angular position of the rotating drum 15.

The at least one software management module of the management and synchronization unit 18 may be configured to associate with a state of advancement of the cutting profile, associated with an angular position of the rotating drum 15 or with an advancement position on the support plane 15', relative positioning coordinates of the laser beam FL.

Each laser head device 17 may continuously execute the dynamic cutting profile with a predefined number n of points on the profile, each corresponding to a set of positioning coordinates of the respective laser beam FL. The energy used along the dynamic cutting profile is variable by dynamically modulating an instantaneous movement speed of the laser beam FL, in order to increase the density of the aforesaid points in the cutting areas that require greater energy and/or decrease the density of points in the cutting areas that require less energy.

Therefore, it is possible to create the cutting profile using a constant energy along the profile, or by varying the energy used along the profile, if necessary, without resorting to an analog or digital modulation on the laser source of the laser beam FL power.

In fact, by keeping the execution time t of a work cycle constant, given by the incoming film feed speed F1, and the number n of points on the profile, predefined by at least one software management module, it is possible to create the cutting profile using a constant energy by equi-spacing the n points, that is, always using the same time dt= t/n to pass with the laser beam FL from a given set of coordinates to the next set of coordinates, with a corresponding displacement ds, thus maintaining the instantaneous speed Vi = ds/dt constant. When it is necessary to vary the energy used along the profile, it is possible to dynamically modulate the instantaneous speed Vi of the laser beam FL movement, in order to increase the density of points in the cutting areas that require more energy and/or decrease the density of points in the cutting areas that require less energy. This overcomes the limitations imposed by traditional systems, which vary the energy by modulating the power of the beam on the laser source and are therefore subject to electronic and optical response delays.

The correct execution of the cutting profiles P1, P2 exemplified in Fig. 6a requires a very high positional precision of the galvanometric motors 22, 24: the alignment of the two cutting profiles P1, P2 has a margin of error of a few micrometres. Furthermore, the meeting points between the two profiles P1, P2 correspond to points of reversal of the cutting direction, therefore it is necessary to take into account the accelerations of the galvanometric motors 22, 24 at these points.

The cutting profiles P1', P2' exemplified in Fig. 6b are less subject to critical alignment errors. On the other hand, they may require relatively large working windows WW. In fact, the size of a typical incoming film F1 along the transverse direction CD may be in the order of 50 mm - 300 mm, preferably in the order of 200 mm - 300 mm, therefore producing each transverse singularization cut requires working windows of at least 200-300 mm x 200-300 mm.

This requirement may dictate a relatively large diameter for each laser beam FL. In fact, for optical and geometric reasons, the exact focus position of the laser beam FL, corresponding to the maximum cutting precision, is located on a curved focus surface SF tangent to the center of the working window WW (Fig. 5a). A working window WW within which the laser beam FL is reasonably close to the focus conditions therefore includes points on the incoming film surface F1 that are no more than one focus depth of the laser beam SF away from the focus surface SF. In other words, the size of the working window WW within which the cutting accuracy is reasonably high is larger the greater the depth of focus of the laser beam FL. On the other hand, as is known, the depth of focus of the laser beam FL is greater the larger the diameter of the focused laser beam FL (spot size).

For example, a working window WW of about 200 mm x 200 mm typically has laser beams FL with diameters varying up to about 50 µm - 60 µm.

On the other hand, to perform high quality and precision cuts, it is preferable to use a laser beam FL that is stable across the entire working window WW and has a very small diameter, preferably in the order of approximately 10 µm - 30 µm, which allows a drastic reduction in the size of the heat-affected zones, or HAZ (i.e. areas of the electrode film E0 whose properties are modified by the heat due to laser cutting) and requires the generation of a lower overall laser power, allowing a reduction in the electrical consumption of the apparatus 10. Furthermore, the use of a lower laser power extends the life of all the optical elements of the optical path, including the focusing 20 and movement 21 optical elements, and allows their simplification, reducing or eliminating the need for cooling units and/or coatings with protective materials.

The working window WW may be enlarged without having to increase the diameter of the corresponding laser beam FL if the respective laser head device 17 includes dynamic focal length modulation means (Figs. 5b-c).

For this object, each laser head device 17 may comprise at least one mobile lens 27, positioned to intercept the respective laser beam FL so as to selectively modify a focus position of the respective laser beam FL striking on the incoming film F1 along the optical axis Z, to achieve a dynamic modulation of a focal length of the laser beam FL along the optical axis Z.

By means of an appropriate dynamic modulation of the focal length of the laser beam FL, depending on the required position of the laser beam FL on the incoming film surface F1 within the working window WW, the mobile lens 27 may transform the focus surface SF of the laser beam FL into a surface essentially coinciding with the desired working window WW (Figs. 5b-c).

In embodiments of the apparatus 10 comprising a rotating drum 15 for support during cutting operations, this focus surface SF essentially coinciding with the working window WW must assume a curved geometry conjugated with the curved outer lateral surface ST of the rotating drum 15 and with the incoming film F1 adhering to the latter.

When the laser beam FL needs to be moved with respect to the center of the working window WW (condition shown in Fig. 5b), the mobile lens 27 may be translated so as to appropriately move, for example lower or raise, the focus point of the laser beam FL at the point of the working window WW where the laser beam needs to be moved (Fig. 5c).

Each laser head device 17 may comprise a motorized linear translator, or carriage 28, for example controlled by a third control unit 28a, and configured to move the mobile lens 27.

The management and synchronization unit 18 may be configured to synchronize the advancing movement of the incoming film F1 with the optical movement devices 21 and with the linear translator 28, based on the aforesaid periodic signal generated at the completion of each work cycle by the z-encoder associated with the advancing movement of the incoming film F1 itself. For example, the management and synchronization unit 18 may be configured to manage in a coordinated and synchronized manner the first 22a, second 24a and third 28a control units in order to achieve the necessary dynamic modulation of the focal length.

The apparatus 10 may also provide, downstream of the cutting unit 14, at least one cleaning device 19 (Fig. 1), configured to remove any contamination or defects from the surface of the electrode film E0. In fact, dust and fumes from laser cutting may contaminate the electrode film E0, while defects, the so-called residual burrs, may form near the cuts, due to the unwanted accumulation of material melted and resolidified by the cut.

The at least one cleaning device 19 may be a rotating brush contact cleaning device, and/or a noncontact vacuum-induced microvibration cleaning device. The cleaning device 19 is configured to dynamically clean both surfaces of the electrode film E0 by mechanical action, electrostatic induction, suction and/or air blows.

One or more similar cleaning devices may also be advantageously provided to dynamically clean the outer lateral surface ST of the rotating drum 15.

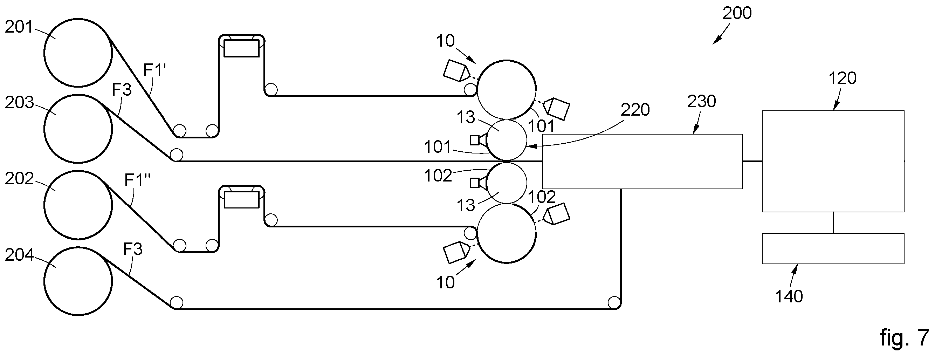

In embodiments, the apparatus 10 may be integrated into an in-line machine 200 for the continuous production of monocells 100 for the production of electrical energy storage devices (Fig. 7).

In this case, the movement device 11 may be integrated into the in-line machine 200.

The in-line machine 200 may comprise a plurality of material feeding devices for making the two electrode films 101, 102 and one or more separators 103 of the monocell 100, such as a first feeding reel 201 of a first incoming film F1', a second feeding reel 202 of a second incoming film F1'' and a third 203 and fourth 204 feeding reel for two separating films F3.

The in-line machine 200 may comprise, downstream of these feeding devices along the machine direction MD of material advancement, at least one apparatus 10, preferably two apparatuses 10 for producing, respectively, first electrode films 101 starting from the first incoming film F1' and second electrode films 102 starting from the second incoming film F1'', respectively fed by the first 201 and the second 202 feed reel, which therefore each act as a feed reel 12 as described above.

Each transfer device 13 downstream of each cutting unit 14 may be configured to transfer each respective first 101 or second 102 electrode film exiting the respective apparatus 10 to the same lamination apparatus 220 configured to couple, laminate and press the individual electrode films 101, 102 onto opposite sides of a separator film F3. In embodiments, each transfer device 13 is an integral part of the lamination apparatus 220, as shown in Fig. 7.

The in-line machine 200 may include induction and radiation heating means applied to each transfer device 13 and configured to heat the electrode films 101, 102 to ensure proper adhesion between them and the separator film F3.

In embodiments, the in-line machine 200 may comprise a further heated laminating unit 230 for coupling a further separator film F3. Induction and radiation heating means may be applied to the further lamination unit 230 for the coupling of the further separator film F3.

The in-line machine 200 may then include a further cutting station 120 for a final cut of the coupled material, in particular of the separator films F3 (thus obtaining the separators 103 already included in the structure of the respective monocell 100), so as to separate the monocells 100.

The in-line machine 200 may further comprise a stacking apparatus 140 for stacking a plurality of monocells 100.

It is clear that modifications and/or additions of parts and/or steps may be made to the apparatus 10 and the relative method described up to now, without departing from the scope of the present invention as defined by the claims.

It is also clear that, although the present invention has been described with reference to some specific examples, an expert in the field will be able to create other equivalent forms of cutting apparatus and relative method, having the characteristics expressed in the claims and therefore all falling within the scope of protection defined therein.

In the following claims, the references in brackets have the sole object of facilitating the reading and should not be considered as limiting factors regarding the scope of protection defined by the claims themselves.

## Claims

1. A cutting apparatus (10) for producing an electrode film (E0, 101, 102) usable for producing electrical energy storage devices starting from an incoming film (F1, F1', F1"), comprising a continuous movement device (11) and a cutting unit (14), wherein said cutting unit (14) comprises two laser head devices (17) configured to each generate and focus a respective laser beam (FL) along a desired optical axis (Z), each laser head device (17) comprising two optical movement devices (21) configured to receive and direct the respective laser beam (FL) in such a way as to hit said incoming film (F1, F1', F1"), and at least one control unit (22a, 24a) configured to control said two optical movement devices (21) so as to selectively move said laser beam (FL) hitting said film (F1, F1', F1") along two respective axes (X, Y) perpendicular to each other and also to said optical axis (Z), so that said two laser head devices (17) in combination are able to continuously perform notching cutting and singularization of said film (F1, F1', F1") in the same passage, wherein said two laser head devices (17) are configured to alternately perform the notching cutting of two sides (DS, OS) of said film (F1, F1', F1'') parallel to its feed direction (MD), changing the working side between each electrode film (E0, 101, 102) and the subsequent electrode film (E0, 101, 102) performing a transversal singularization cut by modulating the energy profile of each laser beam (FL) at least in the passage from one of said two sides (DS, OS) to the other (OS, DS),
**characterized in that** each laser head device (17) is configured to continuously perform a series of equal work cycles, each work cycle envisaging a sequence of movements of the respective laser beam (FL) corresponding to the continuous execution of a closed dynamic cutting profile, terminating each work cycle with said laser beam (FL) in the same position wherein the same work cycle began,
and wherein the cutting apparatus (10) comprises a management and synchronization unit (18), configured to manage a laser source of each laser head device (17) by modulating the power emitted, synchronize each laser head device (17) and synchronize the movement of advancing of said film (F1, F1', F1") with said one or more optical movement devices (21), on the basis of a periodic signal generated by a z-encoder associated with the advancing movement of said film (F1, F1', F1") upon completion of each of said work cycles.

2. An apparatus (10) as in claim 1, wherein each laser head device (17) comprises at least one motorized linear translator (28) configured to move a mobile lens (27) positioned to intercept the respective laser beam (FL) in such a way as to selectively modify a focus position of said laser beam (FL) which hits said incoming film (F1, F1', F1") along said optical axis (Z), thus creating a dynamic modulation of a focal distance of said laser beam (FL) along said optical axis (Z) depending on a position required of said laser beam (FL) on the surface of said incoming film (F1, F1', F1").

3. An apparatus (10) as in any of the preceding claims, wherein said optical movement devices (21) each comprise at least one first (22) and one second (24) galvanometric motor, configured to move a respective first (23) and second (25) mirror to guide said laser beam (FL) selectively along said respective axes (X, Y).

4. A cutting method for producing an electrode film (E0, 101, 102) usable for producing electrical energy storage devices starting from an incoming film (F1, F1', F1"), said method comprising continuously moving said film (F1, F1', F1") and performing a laser cutting by means of a cutting unit (14), wherein the method continuously produces notching cutting and singularization of said film (F1, F1', F1") in the same passage, by means of at least two laser head devices (17) of said cutting unit (14), which each generate and focus at least one respective laser beam (FL) along a desired optical axis (Z) in such a way as to hit said film (F1, F1', F1") and move it selectively along two respective axes (X, Y) perpendicular to each other and to said optical axis (Z) by means of two optical movement devices (21) controlled by at least one control unit (22a, 24a), wherein said two laser head devices (17) alternately perform the notching cutting of two sides (DS, OS) of said film (F1, F1', F1'') parallel to its feed direction (MD), changing the working side between each electrode film (E0, 101, 102) and the subsequent electrode film (E0, 101, 102) performing a transversal singularization cut by modulating the energy profile of each laser beam (FL) at least in the passage from one of said two sides (DS, OS) to the other (OS, DS),
**characterized in that** each laser head device (17) continuously performs a series of equal work cycles, each work cycle envisaging a sequence of movements of the respective laser beam (FL) corresponding to the continuous execution of a closed dynamic cutting profile, terminating each work cycle with said laser beam (FL) in the same position wherein the same work cycle began,
and wherein a management and synchronization unit (18) manages a laser source of each laser head device (17) by modulating the power emitted, synchronize each laser head device (17) and synchronize the movement of advancing of said film (F1, F1', F1") with said one or more optical movement devices (21), on the basis of a periodic signal generated by a z-encoder associated with the advancing movement of said film (F1, F1', F1") upon completion of each of said work cycles.

5. A cutting method as in claim 4, wherein each laser head device (17) dynamically modulates a focal distance of the respective laser beam (FL) along said optical axis (Z) by means of a linear translator (28), which moves a mobile lens (27) that intercepts the respective laser beam (FL) and selectively modifies a focus position thereof depending on a required position of said laser beam (FL) on the surface of said incoming film (F1, F1' , F1").

6. An in-line machine (200) for continuously producing monocells (100) for producing electrical energy storage devices comprising, in succession along a machine direction (MD) of advancing, devices (201, 202, 203, 204) for feeding material for producing two respective electrode films (101, 102) and one or more separators (103), at least one cutting apparatus (10) as in any of claims 1 to 3, a lamination apparatus (220) configured to couple said electrode films (101, 102) with a separator film (F3), a possible further lamination unit (230) for coupling a further separator film (F3), a further cutting station (120) for a final cutting of the coupled material so as to singularize monocells (100), and an apparatus (140) for stacking monocells.

## Patentansprüche

1. Eine Schneidvorrichtung (10) zur Herstellung einer Elektrodenfolie (E0, 101, 102), die zur Herstellung von elektrischen Energiespeichervorrichtungen aus einer eingehenden Folie (F1, F1', F1") verwendbar ist, umfassend eine kontinuierliche Bewegungseinrichtung (11) und eine Schneideinheit (14), wobei besagte Schneideinheit (14) zwei Laserstrahlkopfeinrichtungen (17) umfasst, die jeweils dazu eingerichtet sind, einen jeweiligen Laserstrahl (FL) entlang einer gewünschten optischen Achse (Z) zu erzeugen und zu fokussieren, wobei jede Laserstrahlkopfeinrichtung (17) zwei optische Bewegungseinrichtungen (21) umfasst, die dazu eingerichtet sind, den jeweiligen Laserstrahl (FL) so zu empfangen und zu lenken, dass er besagte eingehende Folie (F1, F1', F1") trifft, und mindestens eine Steuereinheit (22a, 24a), die dazu eingerichtet ist, besagte zwei optischen Bewegungseinrichtungen (21) so zu steuern, dass besagter die Folie (F1, F1', F1") treffende Laserstrahl (FL) selektiv entlang zwei zueinander und auch zu besagter optischen Achse (Z) senkrechten Achsen (X, Y) bewegt wird, so dass besagte zwei Laserstrahlkopfeinrichtungen (17) in Kombination in der Lage sind, kontinuierlich Kerbschnitt und Vereinzelung besagter Folie (F1, F1', F1") im selben Durchgang durchzuführen, wobei besagte zwei Laserstrahlkopfeinrichtungen (17) dazu eingerichtet sind, abwechselnd den Kerbschnitt von zwei Seiten (DS, OS) besagter Folie (F1, F1', F1'') parallel zu ihrer Vorschubrichtung (MD) durchzuführen, wobei die Arbeitsseite zwischen jeder Elektrodenfolie (E0, 101, 102) und der nachfolgenden Elektrodenfolie (E0, 101, 102) gewechselt wird, indem ein transversaler Vereinzelungsschnitt durch Modulieren des Energieprofils jedes Laserstrahls (FL) mindestens beim Übergang von einer besagten zwei Seiten (DS, OS) zur anderen (OS, DS) durchgeführt wird,
**dadurch gekennzeichnet, dass** jede Laserstrahlkopfeinrichtung (17) dazu eingerichtet ist, kontinuierlich eine Reihe gleicher Arbeitszyklen durchzuführen, wobei jeder Arbeitszyklus eine Bewegungssequenz des jeweiligen Laserstrahls (FL) vorsieht, die der kontinuierlichen Ausführung eines geschlossenen dynamischen Schneidprofils entspricht und jeden Arbeitszyklus mit besagtem Laserstrahl (FL) in derselben Position beendet, in der derselbe Arbeitszyklus begann,
und wobei die Schneidvorrichtung (10) eine Verwaltungs- und Synchronisationseinheit (18) umfasst, die dazu eingerichtet ist, eine Laserquelle jeder Laserstrahlkopfeinrichtung (17) durch Modulieren der emittierten Leistung zu steuern, jede Laserstrahlkopfeinrichtung (17) zu synchronisieren und die Vorschubbewegung besagter Folie (F1, F1', F1") mit besagter einen oder mehreren optischen Bewegungseinrichtungen (21) auf der Grundlage eines periodischen Signals zu synchronisieren, das von einem mit der Vorschubbewegung besagter Folie (F1, F1', F1") verbundenen Z-Encoder nach Abschluss jedes besagten Arbeitszyklen erzeugt wird.

2. Eine Vorrichtung (10) nach Anspruch 1, wobei jede Laserstrahlkopfeinrichtung (17) mindestens einen motorisierten Lineartranslator (28) umfasst, der dazu eingerichtet ist, eine bewegliche Linse (27), die positioniert ist, um den jeweiligen Laserstrahl (FL) abzufangen, so zu bewegen, dass selektiv eine Fokusposition besagten die eingehende Folie (F1, F1', F1") treffenden Laserstrahls (FL) entlang besagter optischen Achse (Z) modifiziert wird, wodurch eine dynamische Modulation einer Brennweite besagten Laserstrahls (FL) entlang besagter optischen Achse (Z) in Abhängigkeit von einer erforderlichen Position besagten Laserstrahls (FL) auf der Oberfläche besagter eingehenden Folie (F1, F1', F1") erzeugt wird.

3. Eine Vorrichtung (10) nach einem der vorhergehenden Ansprüche, wobei besagte optischen Bewegungseinrichtungen (21) jeweils mindestens einen ersten (22) und einen zweiten (24) Galvanometer-Motor umfassen, die dazu eingerichtet sind, einen jeweiligen ersten (23) und zweiten (25) Spiegel zu bewegen, um besagten Laserstrahl (FL) selektiv entlang besagter jeweiligen Achsen (X, Y) zu führen.

4. Ein Schneidverfahren zur Herstellung einer Elektrodenfolie (E0, 101, 102), die zur Herstellung von elektrischen Energiespeichervorrichtungen aus einer eingehenden Folie (F1, F1', F1") verwendbar ist, wobei besagtes Verfahren das kontinuierliche Bewegen besagter Folie (F1, F1', F1") und das Durchführen eines Laserschneidens mittels einer Schneideinheit (14) umfasst, wobei das Verfahren kontinuierlich Kerbschnitt und Vereinzelung besagter Folie (F1, F1', F1") im selben Durchgang mittels mindestens zwei Laserstrahlkopfeinrichtungen (17) besagter Schneideinheit (14) erzeugt, die jeweils mindestens einen jeweiligen Laserstrahl (FL) entlang einer gewünschten optischen Achse (Z) so erzeugen und fokussieren, dass er besagte Folie (F1, F1', F1") trifft und ihn selektiv entlang zwei zueinander und zu besagter optischen Achse (Z) senkrechten Achsen (X, Y) mittels zweier optischer Bewegungseinrichtungen (21) bewegt, die von mindestens einer Steuereinheit (22a, 24a) gesteuert werden, wobei besagte zwei Laserstrahlkopfeinrichtungen (17) abwechselnd den Kerbschnitt von zwei Seiten (DS, OS) besagter Folie (F1, F1', F1'') parallel zu ihrer Vorschubrichtung (MD) durchführen, wobei die Arbeitsseite zwischen jeder Elektrodenfolie (E0, 101, 102) und der nachfolgenden Elektrodenfolie (E0, 101, 102) gewechselt wird, indem ein transversaler Vereinzelungsschnitt durch Modulieren des Energieprofils jedes Laserstrahls (FL) mindestens beim Übergang von einer besagten zwei Seiten (DS, OS) zur anderen (OS, DS) durchgeführt wird,
**dadurch gekennzeichnet, dass** jede Laserstrahlkopfeinrichtung (17) kontinuierlich eine Reihe gleicher Arbeitszyklen durchführt, wobei jeder Arbeitszyklus eine Bewegungssequenz des jeweiligen Laserstrahls (FL) vorsieht, die der kontinuierlichen Ausführung eines geschlossenen dynamischen Schneidprofils entspricht und jeden Arbeitszyklus mit besagtem Laserstrahl (FL) in derselben Position beendet, in der derselbe Arbeitszyklus begann,
und wobei eine Verwaltungs- und Synchronisationseinheit (18) eine Laserquelle jeder Laserstrahlkopfeinrichtung (17) durch Modulieren der emittierten Leistung steuert, jede Laserstrahlkopfeinrichtung (17) synchronisiert und die Vorschubbewegung besagter Folie (F1, F1', F1") mit besagter einen oder mehreren optischen Bewegungseinrichtungen (21) auf der Grundlage eines periodischen Signals synchronisiert, das von einem mit der Vorschubbewegung besagter Folie (F1, F1', F1") verbundenen Z-Encoder nach Abschluss jedes besagten Arbeitszyklen erzeugt wird.

5. Ein Schneidverfahren nach Anspruch 4, wobei jede Laserstrahlkopfeinrichtung (17) eine Brennweite des jeweiligen Laserstrahls (FL) entlang besagter optischen Achse (Z) mittels eines Lineartranslators (28) dynamisch moduliert, der eine bewegliche Linse (27) bewegt, die den jeweiligen Laserstrahl (FL) abfängt und selektiv eine Fokusposition desselben in Abhängigkeit von einer erforderlichen Position besagten Laserstrahls (FL) auf der Oberfläche besagter eingehenden Folie (F1, F1', F1") modifiziert.

6. Eine Inline-Maschine (200) zur kontinuierlichen Herstellung von Monozellen (100) zur Herstellung von elektrischen Energiespeichervorrichtungen, umfassend, in Folge entlang einer Maschinenvorschubrichtung (MD), Einrichtungen (201, 202, 203, 204) zum Zuführen von Material zur Herstellung von zwei jeweiligen Elektrodenfolien (101, 102) und einem oder mehreren Separatoren (103), mindestens eine Schneidvorrichtung (10) nach einem der Ansprüche 1 bis 3, eine Laminierungsvorrichtung (220), die dazu eingerichtet ist, besagte Elektrodenfolien (101, 102) mit einer Separatorfolie (F3) zu verbinden, eine mögliche weitere Laminierungseinheit (230) zum Verbinden einer weiteren Separatorfolie (F3), eine weitere Schneidstation (120) für einen endgültigen Schnitt des verbundenen Materials, um Monozellen (100) zu vereinzeln, und eine Vorrichtung (140) zum Stapeln von Monozellen.

## Revendications

1. Un dispositif de découpe (10) pour produire un film d'électrode (E0, 101, 102) utilisable pour produire des dispositifs de stockage d'énergie électrique à partir d'un film entrant (F1, F1', F1"), comprenant un dispositif de mouvement continu (11) et une unité de découpe (14), dans lequel ladite unité de découpe (14) comprend deux dispositifs de tête laser (17) configurés pour chacun générer et focaliser un faisceau laser respectif (FL) le long d'un axe optique souhaité (Z), chaque dispositif de tête laser (17) comprenant deux dispositifs de mouvement optique (21) configurés pour recevoir et diriger le faisceau laser respectif (FL) de manière à frapper ledit film entrant (F1, F1', F1"), et au moins une unité de commande (22a, 24a) configurée pour commander lesdits deux dispositifs de mouvement optique (21) de manière à déplacer sélectivement ledit faisceau laser (FL) frappant ledit film (F1, F1', F1") le long de deux axes respectifs (X, Y) perpendiculaires entre eux et audit axe optique (Z), de sorte que lesdits deux dispositifs de tête laser (17) en combinaison soient capables d'effectuer en continu une découpe par entaillage et une singularisation dudit film (F1, F1', F1") dans le même passage, dans lequel lesdits deux dispositifs de tête laser (17) sont configurés pour effectuer alternativement la découpe par entaillage de deux côtés (DS, OS) dudit film (F1, F1', F1'') parallèles à sa direction d'avance (MD), en changeant le côté de travail entre chaque film d'électrode (E0, 101, 102) et le film d'électrode suivant (E0, 101, 102) en effectuant une coupe de singularisation transversale en modulant le profil d'énergie de chaque faisceau laser (FL) au moins lors du passage de l'un desdits deux côtés (DS, OS) à l'autre (OS, DS),
**caractérisé en ce que** chaque dispositif de tête laser (17) est configuré pour effectuer en continu une série de cycles de travail identiques, chaque cycle de travail prévoyant une séquence de mouvements du faisceau laser respectif (FL) correspondant à l'exécution continue d'un profil de coupe dynamique fermé, terminant chaque cycle de travail avec ledit faisceau laser (FL) dans la même position où le même cycle de travail a commencé,
et dans lequel le dispositif de découpe (10) comprend une unité de gestion et de synchronisation (18), configurée pour gérer une source laser de chaque dispositif de tête laser (17) en modulant la puissance émise, synchroniser chaque dispositif de tête laser (17) et synchroniser le mouvement d'avance dudit film (F1, F1', F1") avec lesdits un ou plusieurs dispositifs de mouvement optique (21), sur la base d'un signal périodique généré par un codeur-z associé au mouvement d'avance dudit film (F1, F1', F1") à l'achèvement de chacun desdits cycles de travail.

2. Un appareil (10) selon la revendication 1, dans lequel chaque dispositif de tête laser (17) comprend au moins un translateur linéaire motorisé (28) configuré pour déplacer une lentille mobile (27) positionnée pour intercepter le faisceau laser respectif (FL) de manière à modifier sélectivement une position de foyer dudit faisceau laser (FL) qui frappe ledit film entrant (F1, F1', F1") le long dudit axe optique (Z), créant ainsi une modulation dynamique d'une distance focale dudit faisceau laser (FL) le long dudit axe optique (Z) en fonction d'une position requise dudit faisceau laser (FL) sur la surface dudit film entrant (F1, F1', F1").

3. Un appareil (10) selon l'une quelconque des revendications précédentes, dans lequel lesdits dispositifs de mouvement optique (21) comprennent chacun au moins un premier (22) et un second (24) moteur galvanométrique, configurés pour déplacer un premier (23) et un second (25) miroir respectifs pour guider ledit faisceau laser (FL) sélectivement le long desdits axes respectifs (X, Y).

4. Un procédé de découpe pour produire un film d'électrode (E0, 101, 102) utilisable pour produire des dispositifs de stockage d'énergie électrique à partir d'un film entrant (F1, F1', F1"), ledit procédé comprenant le déplacement continu dudit film (F1, F1', F1") et l'exécution d'une découpe laser au moyen d'une unité de découpe (14), dans lequel le procédé produit en continu une découpe par entaillage et une singularisation dudit film (F1, F1', F1") dans le même passage, au moyen d'au moins deux dispositifs de tête laser (17) de ladite unité de découpe (14), qui génèrent et focalisent chacun au moins un faisceau laser respectif (FL) le long d'un axe optique souhaité (Z) de manière à frapper ledit film (F1, F1', F1") et le déplacent sélectivement le long de deux axes respectifs (X, Y) perpendiculaires entre eux et audit axe optique (Z) au moyen de deux dispositifs de mouvement optique (21) commandés par au moins une unité de commande (22a, 24a), dans lequel lesdits deux dispositifs de tête laser (17) effectuent alternativement la découpe par entaillage de deux côtés (DS, OS) dudit film (F1, F1', F1") parallèles à sa direction d'avance (MD), en changeant le côté de travail entre chaque film d'électrode (E0, 101, 102) et le film d'électrode suivant (E0, 101, 102) en effectuant une coupe de singularisation transversale en modulant le profil d'énergie de chaque faisceau laser (FL) au moins lors du passage de l'un desdits deux côtés (DS, OS) à l'autre (OS, DS),
**caractérisé en ce que** chaque dispositif de tête laser (17) effectue en continu une série de cycles de travail identiques, chaque cycle de travail prévoyant une séquence de mouvements du faisceau laser respectif (FL) correspondant à l'exécution continue d'un profil de coupe dynamique fermé, terminant chaque cycle de travail avec ledit faisceau laser (FL) dans la même position où le même cycle de travail a commencé,
et dans lequel une unité de gestion et de synchronisation (18) gère une source laser de chaque dispositif de tête laser (17) en modulant la puissance émise, synchronise chaque dispositif de tête laser (17) et synchronise le mouvement d'avance dudit film (F1, F1', F1") avec lesdits un ou plusieurs dispositifs de mouvement optique (21), sur la base d'un signal périodique généré par un codeur-z associé au mouvement d'avance dudit film (F1, F1', F1") à l'achèvement de chacun desdits cycles de travail.

5. Un procédé de découpe selon la revendication 4, dans lequel chaque dispositif de tête laser (17) module dynamiquement une distance focale du faisceau laser respectif (FL) le long dudit axe optique (Z) au moyen d'un translateur linéaire (28), qui déplace une lentille mobile (27) qui intercepte le faisceau laser respectif (FL) et modifie sélectivement une position de foyer de celui-ci en fonction d'une position requise dudit faisceau laser (FL) sur la surface dudit film entrant (F1, F1', F1").

6. Une machine en ligne (200) pour produire en continu des monocellules (100) pour produire des dispositifs de stockage d'énergie électrique comprenant, en succession le long d'une direction machine (MD) d'avance, des dispositifs (201, 202, 203, 204) pour alimenter du matériau pour produire deux films d'électrode respectifs (101, 102) et un ou plusieurs séparateurs (103), au moins un appareil de découpe (10) selon l'une quelconque des revendications 1 à 3, un appareil de laminage (220) configuré pour coupler lesdits films d'électrode (101, 102) avec un film séparateur (F3), une éventuelle unité de laminage supplémentaire (230) pour coupler un film séparateur supplémentaire (F3), une station de découpe supplémentaire (120) pour une découpe finale du matériau couplé de manière à singulariser des monocellules (100), et un appareil (140) pour empiler des monocellules.
